# EUROPEAN PATENT APPLICATION

(11) **EP 4 625 847 A1**
(43) Date of publication of application: **01.10.2025**
(21) Application number: 23905779.7
(22) Date of filing: 13.12.2023
(51) Int. Cl.: H04B 10/69

(54) **RECEIVER, TRANSCEIVER, CHIP, COMMUNICATION DEVICE, AND SIGNAL PROCESSING METHOD**

(30) Priority: 23.12.2022 CN 202211662533; 30.03.2023 CN 202310361867
(71) Applicant: Huawei Technologies Co., Ltd., Shenzhen, Guangdong 518129 (CN)
(72) Inventor: WANG, Guoxi, Shenzhen, Guangdong 518129 (CN); FAN, Chunlei, Shenzhen, Guangdong 518129 (CN)
(74) Representative: Maiwald GmbH
(86) International application number: PCT/CN2023/138429
(87) International publication number: WO 2024/131613

(57) **Abstract**

The present disclosure relates to the field of communication technologies, and provides a receiver, a transceiver, a chip, a communication device, and a signal processing method. The communication device includes an optical module and a chip. A receiver (12) of the chip includes an analog-to-digital converter (121) and an electrical-optical digital signal processing module (122). The analog-to-digital converter (121) can convert a serial analog signal sent by the optical module into a parallel digital signal. The electrical-optical digital signal processing module (122) can perform optical algorithm and electrical algorithm equalization processing on the parallel digital signal, and send a processed parallel digital signal to a processing unit (11) of the chip. Because the receiver (12) of the chip includes the electrical-optical digital signal processing module (122) that can perform optical algorithm and electrical algorithm equalization processing, before sending a signal to the chip, the optical module may not perform optical algorithm equalization processing on the signal. Therefore, processing resources are saved, power consumption is reduced, and a signal delay is reduced.

## Description

The present disclosure claims priorities to Chinese Patent Application No. 202211662533.7, filed on December 23, 2022 and entitled "OPTICAL MODULE", and to Chinese Patent Application No. 202310361867.9, filed on March 30, 2023 and entitled "RECEIVER, TRANSCEIVER, CHIP, COMMUNICATION DEVICE, AND SIGNAL PROCESSING METHOD", both of which are incorporated herein by reference in their entireties.

### TECHNICAL FIELD

The present disclosure relates to the field of communication technologies, and in particular, to a receiver, a transceiver, a chip, a communication device, and a signal processing method.

### BACKGROUND

A communication device usually includes a chip for processing services and an optical module, and the chip implements external communication via the optical module.

A process in which the communication device receives a signal is as follows: The optical module converts a received optical signal into an electrical signal, performs equalization processing on the electrical signal, and sends an electrical signal obtained through the equalization processing to the chip.

In the process in which the communication device receives the signal, the optical module performs the equalization processing on the signal. This takes time and causes an increase in a signal delay.

### SUMMARY

The present disclosure provides a receiver, a transceiver, a chip, a communication device, and a signal processing method. The communication device includes a first optical module and a first chip. A receiver of the first chip includes an electrical-optical digital signal processing module that can perform optical algorithm equalization processing and electrical algorithm equalization processing. Therefore, before sending a signal to the first chip, the first optical module may not perform equalization processing on the signal, so that a signal delay is reduced. Technical solutions of the receiver, the transceiver, the chip, the communication device, and the signal processing method are described below.

According to a first aspect, the present disclosure provides a receiver (receiver), where the receiver is used in a first chip, and the receiver includes an analog-to-digital converter (analog-to-digital converter, ADC) and an electrical-optical digital signal processing (electrical-optical digital signal processing, eo-DSP) module. The ADC is configured to convert a first serial analog signal sent by a first optical module into a first parallel digital signal. The eo-DSP module is configured to: perform optical algorithm equalization processing and electrical algorithm equalization processing on the first parallel digital signal, and send a processed first parallel digital signal to a processing unit of the first chip.

An input end of the ADC is connected to a receiving optical sub-assembly (receiving optical sub-assembly, ROSA) of the first optical module, an output end of the ADC is connected to an input end of the eo-DSP module, and an output end of the eo-DSP module is connected to the processing unit of the first chip.

The eo-DSP module is a module that can perform optical algorithm equalization processing and electrical algorithm equalization processing. The optical algorithm equalization processing is optimization processing performed for transmission impairment and attenuation of a signal on an optical channel, and the electrical algorithm equalization processing is optimization processing performed for transmission impairment and attenuation of a signal on an electrical channel.

A process of receiving a signal by the communication device in the present disclosure is as follows: First, the first optical module receives, through an optical channel (an optical fiber), a first optical signal sent by a second optical module, and the receiving optical sub-assembly converts the first optical signal into the first serial analog signal, and sends the first serial analog signal to the ADC through an electrical channel. Then, the ADC converts the first serial analog signal into the first parallel digital signal, and sends the first parallel digital signal to the eo-DSP module. The first optical signal, the first serial analog signal, and the first parallel digital signal may be considered as different forms of a first signal, and therefore may be collectively referred to as the first signal.

It can be learned from the foregoing process that, in a transmission process of the first signal, the first signal passes through both the optical channel (an optical fiber between the first optical module and the second optical module) and the electrical channel (an electrical channel between the first optical module and the first chip), no equalization processing is performed, and transmission impairment and attenuation of the first signal occur on both the optical channel and the electrical channel.

According to the technical solution provided in the present disclosure, the eo-DSP module is disposed in the receiver of the first chip, so that the eo-DSP module can perform both the optical algorithm equalization processing and the electrical algorithm equalization processing on the first signal (the first parallel digital signal). Therefore, the corresponding optimization processing can be performed for both the transmission impairment and attenuation of the first signal on the optical channel and the transmission impairment and attenuation of the first signal on the electrical channel, and the processing unit of the first chip can receive a signal with high quality.

In addition, the first optical module does not need to perform equalization processing on the received first signal, but may convert the first optical signal into the first serial analog signal and then directly send the first serial analog signal to the first chip, so that a transmission delay of the first signal is reduced. In addition, a signal processing component may be removed from a transmit channel from the first optical module to the first chip, so that costs and power consumption of the first optical module are reduced.

It should be additionally noted that, after the receiving optical sub-assembly of the first optical module converts the first optical signal into the first serial analog signal, if the signal processing component of the first optical module needs to perform equalization processing (for example, optical algorithm equalization processing), the signal processing component needs to first convert the first serial analog signal into the first parallel digital signal, then perform equalization processing on the first parallel digital signal, next convert a processed first parallel digital signal back into the first serial analog signal, and finally send the first serial analog signal to the first chip.

If time taken for performing the optical algorithm equalization processing by the signal processing component of the first optical module is equal to time taken for performing the optical algorithm equalization processing by the eo-DSP module, the eo-DSP module performs the optical algorithm equalization processing, so that the signal processing component does not need to perform serial-to-parallel conversion and parallel-to-serial conversion. In this way, at least time needed for the signal processing component to convert the first serial analog signal into the first parallel digital signal and convert a processed first parallel digital signal into the first serial analog signal is reduced. In addition, it may be understood that, regardless of whether the eo-DSP module needs to perform the optical algorithm equalization processing, the ADC always needs to convert the first serial analog signal into the first parallel digital signal. Therefore, that the optical algorithm equalization processing is performed by the receiver does not cause a case in which the ADC performs additional serial-to-parallel conversion.

In a possible implementation, the ADC is further configured to convert a second serial analog signal sent by a second chip into a second parallel digital signal, where a channel between the first chip and the second chip is an electrical channel. The eo-DSP module is further configured to: perform electrical algorithm equalization processing on the second parallel digital signal, and send a processed second parallel digital signal to the processing unit.

The second serial analog signal and the second parallel digital signal may be considered as different forms of a second signal, and therefore may be collectively referred to as the second signal.

According to the technical solution provided in the present disclosure, because the second signal passes through only the electrical channel in a transmission process, the eo-DSP module performs the electrical algorithm equalization processing only on the second parallel digital signal, to perform corresponding optimization processing on transmission impairment and attenuation of the second signal on the electrical channel, and reduce power consumption and time needed for optical algorithm equalization processing.

In a possible implementation, the eo-DSP module includes an electrical digital signal processing (electrical digital signal processing, eDSP) module and an optical digital signal processing (optical digital signal processing, oDSP) module that are connected in series.

The eDSP module is configured to implement the electrical algorithm equalization processing. The electrical algorithm equalization processing may include feed-forward equalization processing. In this case, the eDSP module may include a feed-forward equalizer (feed-forward equalizer, FFE). The eDSP module may be referred to as a (digital signal processing, DSP) module for short.

The oDSP module is configured to implement the optical algorithm equalization processing. The optical algorithm equalization processing may include one or more of pattern-dependent look-up table (pattern-dependent look-up table, PDLUT) algorithm processing, multipath interference (multipath interference, MPI) algorithm processing, and lite Vol filter (Lite Volterra filter, Lite VOL) algorithm processing. In this case, the oDSP module may include one or more of a PDLUT module, an MPI module, and a Lite VOL module.

In a possible implementation, the eo-DSP module is configured such that when equalization processing is performed on the first parallel digital signal, both the oDSP module and the eDSP module are enabled.

In a possible implementation, the eo-DSP module is configured such that when equalization processing is performed on the second parallel digital signal, the eDSP module is enabled, and the oDSP module is disabled.

In a possible implementation, the eo-DSP module further includes a maximum likelihood sequence estimation (maximum likelihood sequence estimation, MLSE) module. The MLSE module is configured to: perform maximum likelihood determining on the first parallel digital signal obtained by performing the optical algorithm equalization processing and the electrical algorithm equalization processing, and send a determining result to the processing unit.

An input end of the MLSE module is connected to the eDSP module or the oDSP module, and an output end of the MLSE module is connected to the processing unit.

In a possible implementation, the eDSP module, the oDSP module, and the MLSE module are sequentially connected.

In a possible implementation, the oDSP module, the eDSP module, and the MLSE module are sequentially connected.

In a possible implementation, the MLSE module is further configured to: perform maximum likelihood determining on the second parallel digital signal obtained through the electrical algorithm equalization processing, and send a determining result to the processing unit.

In a possible implementation, the receiver further includes a continuous time linear equalizer (continuous time linear equalizer, CTLE). The CTLE is configured to: compensate for the first serial analog signal sent by the first optical module, and send a compensated first serial analog signal to the ADC.

An input end of the CTLE is configured to be connected to the receiving optical sub-assembly of the first optical module, and an output end of the CTLE is connected to the input end of the ADC.

Signals are attenuated when being transmitted on the electrical channel. In addition, when the signals are transmitted on the electrical channel, attenuation of signals of different frequencies is inconsistent. Generally, attenuation of a low-frequency signal is small, and attenuation of a high-frequency signal is large. The inconsistency of the attenuation of the signals of different frequencies may lead to inter-symbol interference (inter-symbol interference, ISI).

According to the technical solution provided in the present disclosure, the CTLE is configured to compensate for the first serial analog signal, to amplify a signal and compensate for attenuation of the signal during transmission on the electrical channel, so that attenuation of signals of different frequencies in the first serial analog signal can tend to be consistent, thereby alleviating the ISI to some extent.

In a possible implementation, the CTLE compensates for a signal of a target frequency in the first serial analog signal.

In a possible implementation, the CTLE compensates for a high-frequency signal in the first serial analog signal.

In a possible implementation, the compensation performed by the CTLE on the high-frequency signal in the first serial analog signal is greater than compensation performed on a low-frequency signal.

In a possible implementation, neither the first optical module nor the second optical module includes a signal processing component, and a gain (gain) of the CTLE for compensating for the first serial analog signal is determined based on the electrical channel between the first chip and the first optical module and an electrical channel between a third chip and the second optical module.

The second optical module is connected to the first optical module through an optical channel, and the third chip is connected to the second optical module through the electrical channel.

A transmission process of the first signal is as follows: The third chip sends a first serial analog signal to the second optical module through the electrical channel, and the second optical module converts the first serial analog signal into a first optical signal, and sends the first optical signal to the first optical module through the optical channel. The first optical module converts the first optical signal into the first serial analog signal, and sends the first serial analog signal to the CTLE of the first chip through the electrical channel.

According to the technical solution provided in the present disclosure, in a transmission process, the first signal (the first serial analog signal) sent by the third chip passes through the electrical channel between the third chip and the second optical module and the electrical channel between the first optical module and the first chip. Therefore, a problem that signal attenuation occurs on both the two electrical channels and attenuation of signals of different frequencies is inconsistent. Therefore, the gain of the CTLE is determined based on the electrical channel between the first chip and the first optical module and the electrical channel between the third chip and the second optical module, so that the CTLE can compensate for the attenuation of the signal on both the two electrical channels.

In a possible implementation, the first optical module has no signal processing component, and the second optical module has a signal processing component. In this case, the gain of the CTLE for compensating for the first serial analog signal is determined based on the electrical channel between the first chip and the first optical module.

A transmission process of the first signal is as follows: The third chip sends a first serial analog signal to the second optical module through the electrical channel, the signal processing component of the second optical module processes the first serial analog signal, and then the second optical module converts the first serial analog signal into a first optical signal, and sends the first optical signal to the first optical module through the optical channel. The first optical module converts the first optical signal into the first serial analog signal, and sends the first serial analog signal to the CTLE of the first chip through the electrical channel.

According to the technical solution provided in the present disclosure, because the signal processing component of the second optical module processes the first serial analog signal sent by the third chip, the signal processing component correspondingly processes attenuation generated on the electrical channel between the third chip and the second optical module. In this way, the CTLE only needs to process the attenuation caused by the electrical channel between the first optical module and the first chip, and in this case, the CTLE determines a corresponding gain based only on the electrical channel between the first optical module and the first chip.

In a possible implementation, the CTLE is further configured to: compensate for the second serial analog signal sent by the second chip, and send a compensated second serial analog signal to the ADC. The input end of the CTLE is further connected to the second chip through an electrical channel.

In a possible implementation, an adjustment range of the gain of the CTLE is 0 dB to 20 dB.

In a possible implementation, the CTLE includes a trans-conductance circuit, a filtering and amplification circuit, and a bypass circuit. An input end of the trans-conductance circuit is configured to receive a serial analog signal (for example, the first serial analog signal or the second serial analog signal), an output end of the trans-conductance circuit is connected to an input end of the filtering and amplification circuit, and an output end of the filtering and amplification circuit is connected to the input end of the ADC. Two ends of the bypass circuit are respectively connected to the input end and the output end of the filtering and amplification circuit, and when the bypass circuit is connected, the bypass circuit short-circuits the filtering and amplification circuit.

The filtering and amplification circuit is configured to filter a signal of a frequency with small attenuation, for example, filter a low-frequency signal, so that attenuation of the signal at all frequency parts is consistent, and is configured to amplify the signal to compensate for attenuation of the signal.

When the bypass circuit is connected, a signal outputted by the trans-conductance circuit is directly inputted to the ADC without passing through the filtering and amplification circuit. In this case, the gain of the CTLE is extremely small, and it may be considered that the gain is 0.

In a possible implementation, the filtering and amplification circuit includes a first filtering circuit, a second filtering circuit, an amplification circuit, and a third filtering circuit that are sequentially connected. The bypass circuit includes a first bypass circuit, a second bypass circuit, a third bypass circuit, and a fourth bypass circuit. Two ends of the first bypass circuit are respectively connected to two ends of the first filtering circuit, two ends of the second bypass circuit are respectively connected to two ends of the second filtering circuit, two ends of the third bypass circuit are respectively connected to an input end of the second filtering circuit and an output end of the amplification circuit, and two ends of the fourth bypass circuit are respectively connected to two ends of the third filtering circuit. When all of the first bypass circuit, the third bypass circuit, and the fourth bypass circuit are connected, the bypass circuit is connected.

The first filtering circuit, the second filtering circuit, and the third filtering circuit are configured to filter a signal of a frequency with small attenuation, for example, filter a low-frequency signal. The amplification circuit is configured to amplify a signal.

When all of the first bypass circuit, the third bypass circuit, and the fourth bypass circuit are connected, the second bypass circuit is short-circuited by the third bypass circuit. Therefore, in this case, whether the second bypass circuit is connected does not affect connection of the bypass circuit.

In a possible implementation, the first chip and the first optical module are packaged in a co-packaged optics (co-packaged optics, CPO) form. The CTLE is configured such that when the first serial analog signal sent by the first optical module is compensated for, the bypass circuit is connected.

According to the technical solution provided in the present disclosure, when the first chip and the first optical module are packaged in the CPO form, the electrical channel between the first optical module and the first chip is very short (where a loss of the electrical channel is less than 10 dB), and the attenuation occurring on the electrical channel is small. Therefore, the bypass circuit may be directly connected, so that the first serial analog signal does not pass through the filtering and amplification circuit.

In a possible implementation, if the first optical module is packaged in a near-packaged optics (near-packaged optics, NPO) form or in an on-board optics (on-board optics, OBO) form, or the first optical module is a pluggable module (pluggable module), the CTLE is configured such that when the first serial analog signal sent by the first optical module is compensated for, the bypass circuit is not connected.

According to a second aspect, the present disclosure provides a transceiver. The transceiver includes a receiver and a transmitter (transmitter), and the receiver is the receiver according to any one of the first aspect.

In a possible implementation, the transmitter includes a digital-to-analog converter (digital-to-analog converter, DAC) and an FFE. The FFE is configured to: perform equalization processing on oscillation points of a third parallel digital signal sent by a processing unit of a first chip, and send a third parallel digital signal obtained through the equalization processing to the DAC, where the FFE includes roaming taps (roaming taps), and positions of the roaming taps correspond to the oscillation points of the third parallel digital signal. The DAC is configured to: convert the third parallel digital signal sent by the FFE into a third serial analog signal, and send the third serial analog signal to a first optical module.

In different application scenarios, because transmit channels corresponding to the first chip are different, oscillation points (or referred to as vibration points) of the third parallel digital signal are different. In a case in which the first optical module does not include a signal processing component, a transmit channel corresponding to the first chip is more complex. An optical channel between the first optical module and a second optical module and even an electrical channel between the second optical module and a third chip affect the positions of the oscillation points, and cases of the oscillation points of the third parallel digital signal are more complex.

However, when the first chip is delivered from a factory, a specific scenario in which the first chip is used is not clear. Therefore, the FFE should be able to process all possible oscillation points of the third parallel digital signal.

According to the technical solution provided in the present disclosure, the FFE is configured with the roaming taps, so that the FFE can adjust, by changing the positions of the taps, the oscillation points corresponding to the FFE, to adapt to different scenarios. In addition, a quantity of taps of the FFE is reduced, and costs are reduced.

In a possible implementation, the transmitter further includes a current mode logic (current mode logic, CML) module, and the CML module is configured to: adjust a swing of the third serial analog signal sent by the DAC, and send an adjusted third serial analog signal to the first optical module.

In a possible implementation, the first chip and the first optical module are packaged in a CPO form, and the third serial analog signal sent by the CML module is for directly driving a laser of the first optical module. In this way, the driver (driver, drv) in the first optical module may be removed, so that costs of the first optical module are reduced.

In a possible implementation, the swing of the third serial analog signal sent by the CML module is greater than 1.5 Vppd.

According to a third aspect, the present disclosure provides a chip. The chip includes a processing unit and the transceiver according to the second aspect.

According to a fourth aspect, the present disclosure provides a communication device. The communication device includes an optical module and the chip in the third aspect. A receiver of the chip is connected to a receiving optical sub-assembly of the optical module, and a transmitter of the chip is connected to a transmitting optical sub-assembly of the optical module.

According to a fifth aspect, the present disclosure provides a signal processing method. The method is applied to a receiver of a first chip, and the method includes: converting a first serial analog signal sent by a first optical module into a first parallel digital signal; performing optical algorithm equalization processing and electrical algorithm equalization processing on the first parallel digital signal; and sending a processed first parallel digital signal to a processing unit of the first chip.

In a possible implementation, after the performing optical algorithm equalization processing and electrical algorithm equalization processing on the first parallel digital signal, the method further includes: performing maximum likelihood determining on the first parallel digital signal obtained by performing the optical algorithm equalization processing and the electrical algorithm equalization processing, and sending a determining result to the processing unit.

In a possible implementation, the method further includes: converting a second serial analog signal sent by a second chip into a second parallel digital signal, where a channel between the first chip and the second chip is an electrical channel; performing electrical algorithm equalization processing on the second parallel digital signal; and sending a processed second parallel digital signal to the processing unit.

In a possible implementation, before the converting a first serial analog signal sent by a first optical module into a first parallel digital signal, the method further includes: compensating for the first serial analog signal sent by the first optical module.

In a possible implementation, a gain for compensating for the first serial analog signal is determined based on an electrical channel between the first chip and the first optical module and an electrical channel between a third chip and a second optical module. The second optical module is connected to the first optical module through an optical channel, and the third chip is connected to the second optical module through the electrical channel.

According to a sixth aspect, the present disclosure provides a receiver. The receiver is used in a first chip, and the receiver includes an ADC and an eo-DSP module. An input end of the ADC is configured to be connected to a receiving optical sub-assembly of the first optical module, an output end of the ADC is connected to an input end of the eo-DSP module, and an output end of the eo-DSP module is connected to the processing unit of the first chip.

In a possible implementation, the eo-DSP module includes an eDSP module and an oDSP module that are connected in series.

In a possible implementation, the oDSP module includes one or more of a PDLUT module, an MPI module, and a Lite VOL module.

In a possible implementation, the eo-DSP module further includes an MLSE module. An input end of the MLSE module is connected to an output end of the eDSP module or an output end of the oDSP module, and an output end of the MLSE module is connected to the processing unit.

In a possible implementation, the eDSP module, the oDSP module, and the MLSE module are sequentially connected.

In a possible implementation, the oDSP module, the eDSP module, and the MLSE module are sequentially connected.

In a possible implementation, the receiver further includes a CTLE. An input end of the CTLE is configured to be connected to the receiving optical sub-assembly of the first optical module, and an output end of the CTLE is connected to the input end of the ADC.

In a possible implementation, the CTLE includes a trans-conductance circuit, a filtering and amplification circuit, and a bypass circuit. An input end of the trans-conductance circuit is configured to be connected to a first optical module and/or a second chip, an output end of the trans-conductance circuit is connected to an input end of the filtering and amplification circuit, and an output end of the filtering and amplification circuit is connected to the input end of the ADC. Two ends of the bypass circuit are respectively connected to the input end and the output end of the filtering and amplification circuit, and when the bypass circuit is connected, the bypass circuit short-circuits the filtering and amplification circuit.

In a possible implementation, the filtering and amplification circuit includes a first filtering circuit, a second filtering circuit, an amplification circuit, and a third filtering circuit that are sequentially connected. The bypass circuit includes a first bypass circuit, a second bypass circuit, a third bypass circuit, and a fourth bypass circuit. Two ends of the first bypass circuit are respectively connected to two ends of the first filtering circuit, two ends of the second bypass circuit are respectively connected to two ends of the second filtering circuit, two ends of the third bypass circuit are respectively connected to an input end of the second filtering circuit and an output end of the amplification circuit, and two ends of the fourth bypass circuit are respectively connected to two ends of the third filtering circuit. When all of the first bypass circuit, the third bypass circuit, and the fourth bypass circuit are connected, the bypass circuit is connected.

According to a seventh aspect, the present disclosure provides a transceiver. The transceiver includes a receiver and a transmitter, and the receiver is the receiver according to any one of the sixth aspect.

In a possible implementation, the transmitter includes a DAC and an FFE. An input end of the FFE is connected to a processing unit of a first chip, an output end of the FFE is connected to an input end of the DAC, and an output end of the DAC is configured to be connected to a first optical module.

The FFE includes roaming taps.

In a possible implementation, the FFE further includes fixed taps.

In a possible implementation, the transmitter further includes a CML module. An input end of the CML module is connected to the output end of the DAC, and an output end of the CML module is configured to be connected to a transmitting optical sub-assembly of the first optical module.

In a possible implementation, a maximum swing of a signal output by the CML module is greater than 1.5 Vppd.

In a possible implementation, the output end of the CML module is configured to be connected to a laser in the transmitting optical sub-assembly of the first optical module. There is no driver between the CML module and the laser.

### BRIEF DESCRIPTION OF DRAWINGS

FIG. 1 is a diagram of a communication system according to an embodiment of the present disclosure;
FIG. 2 is a diagram of a communication device in the related art according to an embodiment of the present disclosure;
FIG. 3 is a diagram of internal structures of a chip and an optical module in the related art according to an embodiment of the present disclosure;
FIG. 4 is a diagram of internal structures of a chip and an optical module according to an embodiment of the present disclosure;
FIG. 5 is a diagram of a communication device according to an embodiment of the present disclosure;
FIG. 6 is a diagram of a communication device according to an embodiment of the present disclosure;
FIG. 7 is a diagram of a communication device according to an embodiment of the present disclosure;
FIG. 8 is a diagram of an internal structure of a chip according to an embodiment of the present disclosure;
FIG. 9 is a diagram of a communication system according to an embodiment of the present disclosure;
FIG. 10 is a diagram of an eo-DSP module according to an embodiment of the present disclosure;
FIG. 11 is a diagram of an oDSP module according to an embodiment of the present disclosure;
FIG. 12 is a diagram of an internal structure of a chip according to an embodiment of the present disclosure;
FIG. 13 is a circuit diagram of a CTLE according to an embodiment of the present disclosure;
FIG. 14 is a circuit diagram of a CTLE according to an embodiment of the present disclosure;
FIG. 15 is a diagram of a trans-conductance circuit according to an embodiment of the present disclosure;
FIG. 16 is a diagram of an internal structure of a chip according to an embodiment of the present disclosure;
FIG. 17 is a diagram of an optical module according to an embodiment of the present disclosure; and
FIG. 18 is a flowchart of a signal processing method according to an embodiment of the present disclosure.

### Reference numerals:

100: First communication device, 101: Switching board, 102: Main control board, 103: Backplane, 200: Second communication device;
1: First chip, 10: Transceiver, 11: Processing unit;
12: Receiver;
121: ADC, 122: eo-DSP module, 1221: eDSP module, 1222: oDSP module, 12221: PDLUT module, 12222: MPI module, 12223: Lite VOL module, 1223: MLSE module;
123: CTLE, 1231: Trans-conductance circuit, 1232: Filtering and amplification circuit, 12321: First filtering circuit, 12322: Second filtering circuit, 12323: Amplification circuit, 123231: Second trans-impedance amplifier, 123232: Resistor, 12324: Third filtering circuit, 1233: Bypass circuit, 12331: First bypass circuit, 12332: Second bypass circuit, 12333: Third bypass circuit, 12334: Fourth bypass circuit;
13: Transmitter, 131: DAC, 132: FFE, 133: CML module;
2: First optical module, 21: Receiving optical sub-assembly, 211: Detector, 212: First trans-impedance amplifier, 22: Transmitting optical sub-assembly, 221: Laser, 222: Driver, 23: Signal processing component;
3: Second chip, 4: Third chip, 5: Second optical module.

### DESCRIPTION OF EMBODIMENTS

A communication device generally includes a chip for processing services and an optical module, and the chip implements external communication via the optical module.

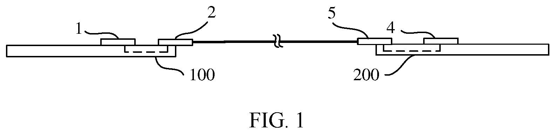

For example, as shown in FIG. 1, a first communication device 100 includes a first chip 1 and a first optical module 2, and the first chip 1 is electrically connected to the first optical module 2. A second communication device 200 includes a third chip 4 and a second optical module 5, and the third chip 4 is electrically connected to the second optical module 5. In addition, the first optical module 2 is connected to the second optical module 5 through an optical fiber (an optical channel).

A process in which the first communication device 100 receives a signal sent by the second communication device 200 is as follows: The first optical module 2 receives an optical signal sent by the second optical module 5, converts the optical signal into an electrical signal, and then sends the electrical signal to the first chip 1.

A process in which the first communication device 100 sends a signal to the second communication device 200 is as follows: The first chip 1 sends an electrical signal to the first optical module 2, and the first optical module 2 converts the electrical signal into an optical signal, and sends the optical signal to the second optical module 5 through the optical fiber.

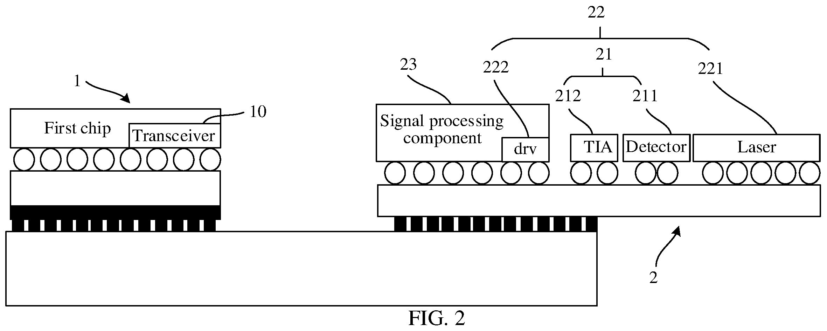

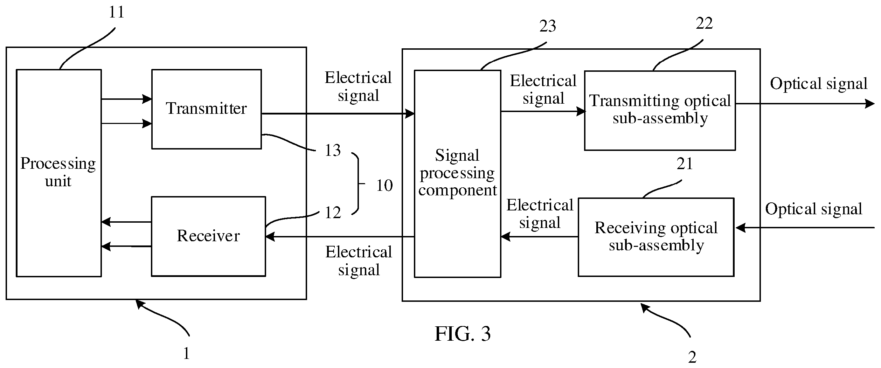

With reference to FIG. 2 and FIG. 3, a structure of the optical module (the first optical module 2) is described below, to describe in more detail processing performed by the first optical module 2 in a signal transmission process.

As shown in FIG. 2 and FIG. 3, the first optical module 2 includes a receiving optical sub-assembly (receiving optical sub-assembly, ROSA) 21, a transmitting optical sub-assembly (transmitting optical sub-assembly, TOSA) 22, and a signal processing component 23.

The signal processing component 23 may also be referred to as a (digital signal processing, DSP) component, a DSP chip, a DSP PHY chip, or the like.

In a process in which the first communication device 100 receives a signal, the receiving optical sub-assembly 21 receives an optical signal sent by the second optical module 5, and converts the optical signal into an electrical signal. Because the optical signal sent by the second optical module 5 to the first optical module 2 has transmission impairment and attenuation on the optical fiber, after receiving the electrical signal converted from the optical signal, the signal processing component 23 performs equalization processing on the electrical signal. Then, an electrical signal obtained through the equalization processing is sent to the first chip 1.

In a process in which the first communication device 100 sends a signal, because an electrical signal sent by the first chip 1 to the first optical module 2 has transmission impairment and attenuation on an electrical channel between the first chip 1 and the first optical module 2, after receiving the electrical signal sent by the first chip 1, the signal processing component 23 performs equalization processing. Then, an electrical signal obtained through the equalization processing is sent to the transmitting optical sub-assembly 22. The transmitting optical sub-assembly 22 converts the electrical signal into an optical signal, and sends the optical signal to the second optical module 5 through the optical fiber.

It can be learned that, in processes in which the first communication device 100 receives a signal and sends a signal, the signal processing component 23 of the first optical module 2 serves as a relay to perform equalization processing on signals. For example, in the signal receiving process, the receiving optical sub-assembly 21 sends a serial analog signal to the signal processing component 23. When performing equalization processing, the signal processing component 23 first needs to convert the serial analog signal into a parallel digital signal, then performs equalization processing on the parallel digital signal, next converts a processed parallel digital signal into a serial analog signal, and finally sends the serial analog signal to the first chip 1.

In the signal sending process, the first chip 1 also sends a serial analog signal to the signal processing component 23. When performing equalization processing, the signal processing component 23 first needs to convert the serial analog signal into a parallel digital signal, then performs equalization processing on the parallel digital signal, next converts a processed parallel digital signal into a serial analog signal, and finally sends the serial analog signal to the transmitting optical sub-assembly 22.

In the foregoing processes, to perform equalization processing, the signal processing component 23 needs to additionally perform serial-to-parallel conversion and parallel-to-serial conversion. This causes a waste of processing resources, increases power consumption, and increases a signal delay. Especially, as a transmission rate of an optical module reaches 53 Gbit/s and 106 Gbit/s, impact of a delay caused by the foregoing technical problem is increasingly serious.

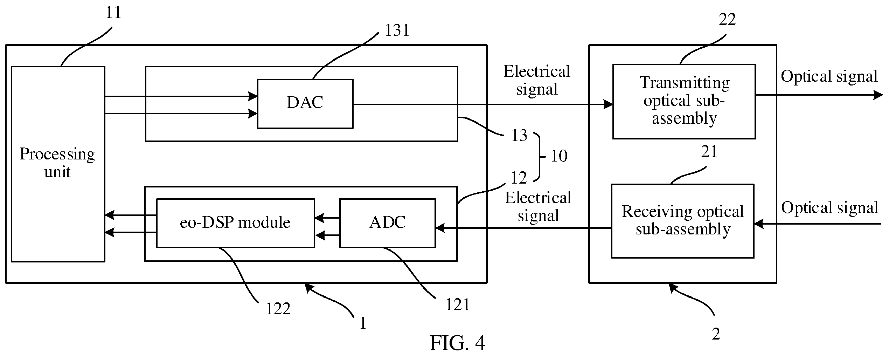

In view of the foregoing technical problem, an embodiment of the present disclosure provides a new communication device (or referred to as a communication architecture). As shown in FIG. 4 to FIG. 7, the communication device includes a first chip 1 and a first optical module 2. A receiver (receiver) 12 and a transmitter (transmitter) 13 in a transceiver 10 of the first chip 1 are electrically connected to a receiving optical sub-assembly 21 and a transmitting optical sub-assembly 22 of the first optical module 2 respectively, and the first optical module 2 does not include a signal processing component 23. In this way, in processes in which the communication device sends a signal and receives a signal, the first optical module 2 does not perform equalization processing, so that processing resources are saved, power consumption is reduced, and a signal delay is reduced.

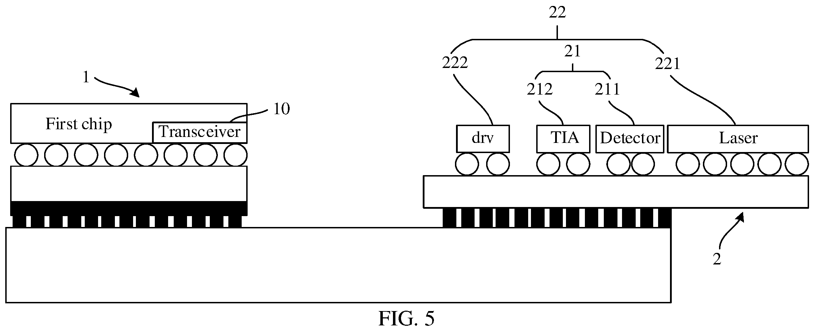

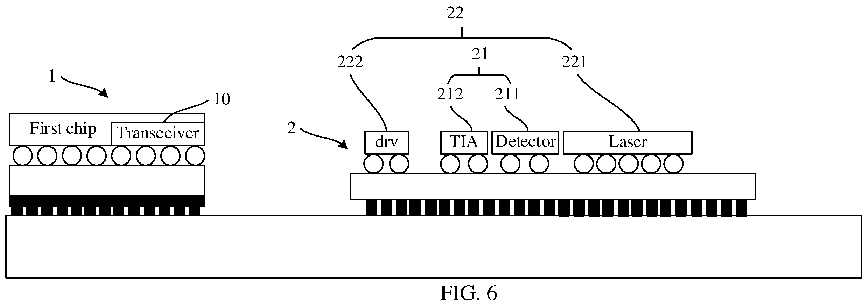

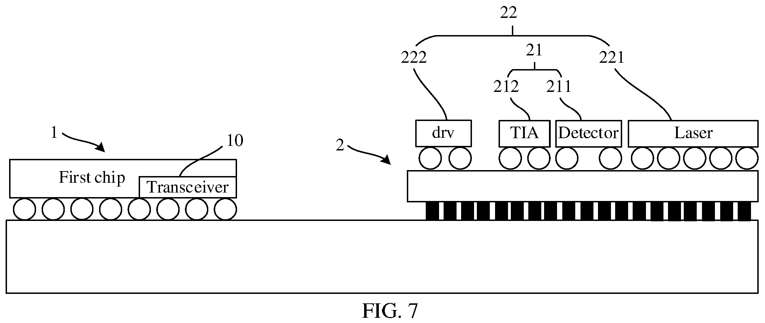

As shown in FIG. 5, the first optical module 2 in the communication device is a pluggable module (pluggable module). As shown in FIG. 6, in the communication device, the first optical module 2 is packaged in a near-packaged optics (near-packaged optics, NPO) form or in an on-board optics (on-board optics, OBO) form. As shown in FIG. 7, in the communication device, the first chip 1 and the first optical module 2 are packaged in a co-packaged optics (co-packaged optics, CPO) form.

It may be understood that, because the signal processing component 23 serving as a relay is removed from the first optical module 2, to enable the communication device to still receive and send signals normally, the first chip 1 may be correspondingly improved. For example, the transceiver 10 in the first chip 1 is correspondingly improved. The transceiver 10 includes the receiver 12 and the transmitter 13. The transceiver 10 may also be referred to as a serializer/deserializer (serializer/deserializer, serdes).

The receiver 12 and the transmitter 13 provided in this embodiment of the present disclosure are separately described below by using examples.

### Receiver 12:

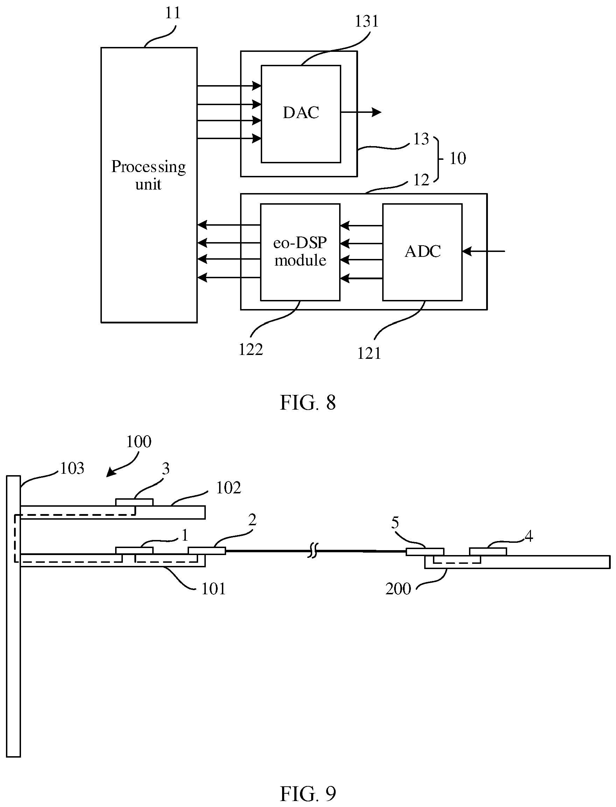

(1) In some examples, as shown in FIG. 4 or FIG. 8, the receiver 12 includes an analog-to-digital converter (analog-to-digital converter, ADC) 121. An input end of the ADC 121 is connected to the receiving optical sub-assembly 21 of the first optical module 2, and an output end of the ADC 121 is connected to a processing unit 11 in the first chip 1. The ADC 121 is configured to: convert a first serial analog signal sent by the first optical module 2 into a first parallel digital signal, and send the first parallel digital signal to the processing unit 11.

The first serial analog signal and the first parallel digital signal may be considered as different forms of a first signal, and therefore may be collectively referred to as the first signal. All signals sent by a third chip 4 to the first chip 1 may be considered as first signals.

In addition, in some more complex communication devices, for example, as shown in FIG. 9, a first communication device 100 is a switch, the first communication device 100 includes a switching board 101, a main control board 102, and a backplane 103, and the first chip 1 and the first optical module 2 are located on the switching board 101. In this case, in addition to a requirement for communicating with the third chip 4 of a second communication device 200, the first chip 1 further has a requirement for communicating with a second chip 3 in the main control board 102 of the first communication device 100. It is clear that the first chip 1 in the switching board 101 further has a requirement for communicating with a second chip 3 in another switching board 101.

The first chip 1 is connected to the second chip 3 through an electrical channel, for example, a printed circuit board (printed circuit board, PCB) cable on the switching board 101, a PCB cable on the backplane 103, and a PCB cable on the main control board 102.

To implement communication between the first chip 1 and the second chip 3, the input end of the ADC 121 is further connected to the second chip 3 through an electrical channel. In this case, the ADC 121 is further configured to: convert a second serial analog signal sent by the second chip 3 into a second parallel digital signal, and send the second parallel digital signal to the processing unit 11.

The second serial analog signal and the second parallel digital signal may be considered as different forms of a second signal, and therefore may be collectively referred to as the second signal. All signals sent by the second chip 3 to the first chip 1 may be considered as second signals.

(2) In the communication device provided in this embodiment of the present disclosure, because the first optical module 2 does not include the signal processing component 23, the receiving optical sub-assembly 21 of the first optical module 2 directly sends, to the first chip 1, the first serial analog signal converted from an optical signal. Actually, in a transmission process, the first signal (the first serial analog signal) received by the receiver 12 passes through at least an optical channel between the first optical module 2 and a second optical module 5 and an electrical channel between the first optical module 2 and the first chip 1, and no equalization processing is performed. As shown in FIG. 9, a channel between the second optical module 5 and the first chip 1 may be referred to as an electrical-optical integration channel.

Further, in a case in which the second optical module 5 does not include a signal processing component 23, in a transmission process, the first signal received by the receiver 12 passes through an electrical channel between the third chip 4 and the second optical module 5, the optical channel between the second optical module 5 and the first optical module 2, and the electrical channel between the first optical module 2 and the first chip 1, and no equalization processing is performed. As shown in FIG. 9, a channel between the third chip 4 and the first chip 1 may be referred to as an electrical-optical integration channel.

To perform corresponding optimization processing on transmission impairment and attenuation of the first signal on the optical channel and transmission impairment and attenuation of the first signal on the electrical channel, in some examples, as shown in FIG. 8, the receiver 12 includes an electrical-optical digital signal processing (electrical-optical digital signal processing, eo-DSP) module 122. An input end of the eo-DSP module 122 is connected to the output end of the ADC 121, and an output end of the eo-DSP module 122 is connected to the processing unit 11. The eo-DSP module 122 is configured to: perform optical algorithm equalization processing and electrical algorithm equalization processing on the first parallel digital signal, and send a processed first parallel digital signal to the processing unit 11 of the first chip 1.

The eo-DSP module 122 is a module that can perform optical algorithm equalization processing and electrical algorithm equalization processing. The optical algorithm equalization processing is optimization processing performed for transmission impairment and attenuation of a signal on an optical channel, and the electrical algorithm equalization processing is optimization processing performed for transmission impairment and attenuation of a signal on an electrical channel.

According to the technical solution provided in this embodiment of the present disclosure, the eo-DSP module 122 is disposed in the receiver 12, so that the eo-DSP module 122 can perform both the optical algorithm equalization processing and the electrical algorithm equalization processing on the first signal (the first parallel digital signal). Therefore, the corresponding optimization processing can be performed for both the transmission impairment and attenuation of the first signal on the optical channel and the transmission impairment and attenuation of the first signal on the electrical channel, and after the signal processing component 23 is removed from the first optical module 2, the processing unit 11 of the first chip 1 can receive a signal with high quality.

In addition, if time taken for performing the optical algorithm equalization processing by the signal processing component 23 of the optical module is equal to time taken for performing the optical algorithm equalization processing by the eo-DSP module 122, the eo-DSP module 122 performs the optical algorithm equalization processing, so that the optical module does not need to perform serial-to-parallel conversion and parallel-to-serial conversion. In this way, at least time needed for converting the first serial analog signal into the first parallel digital signal and converting a processed first parallel digital signal into the first serial analog signal is reduced. It may be understood that, regardless of whether the eo-DSP module 122 needs to perform the optical algorithm equalization processing, the ADC 121 always needs to convert the first serial analog signal into the first parallel digital signal. Therefore, that the eo-DSP module 122 is configured to perform the optical algorithm equalization processing does not cause a case in which the receiver 12 performs additional serial-to-parallel conversion and parallel-to-serial conversion.

In addition, in a case in which the first chip 1 is further connected to the second chip 3 through the electrical channel, the eo-DSP module 122 is further configured to: perform electrical algorithm equalization processing on the second parallel digital signal, and send a processed second parallel digital signal to the processing unit 11.

In other words, because a signal (the second parallel digital signal) sent by the second chip 3 to the first chip 1 passes through the electrical channel but does not pass through an optical channel, the eo-DSP module 122 may not perform optical algorithm equalization processing on the second parallel digital signal, so that power consumption and processing time of the eo-DSP module 122 can be reduced.

An implementation of the eo-DSP module 122 is described below by using examples.

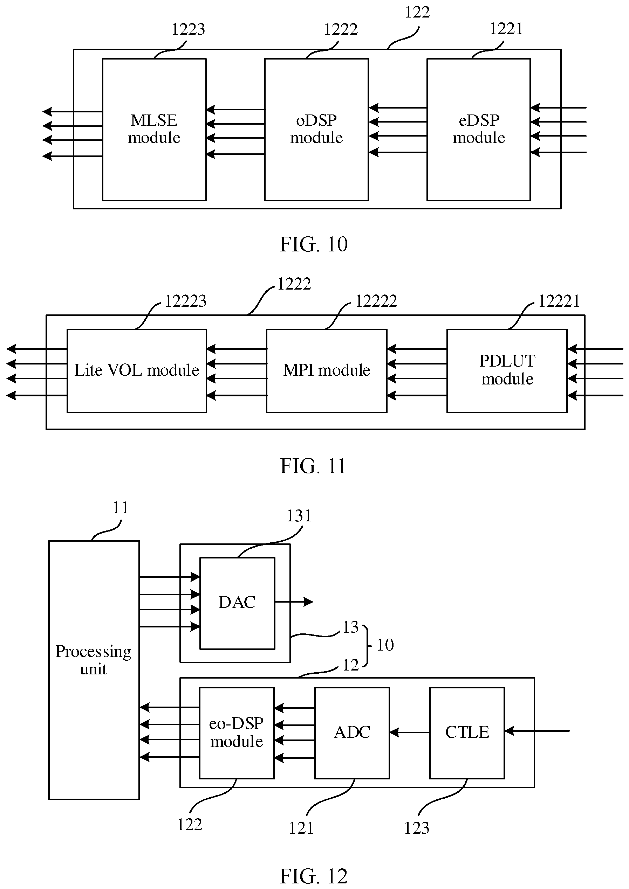

In some examples, as shown in FIG. 10, the eo-DSP module 122 includes an electrical digital signal processing (electrical digital signal processing, eDSP) module 1221 and an optical digital signal processing (optical digital signal processing, oDSP) module 1222 that are connected in series. The eDSP module 1221 is configured to implement electrical algorithm equalization processing, and the oDSP module 1222 is configured to implement optical algorithm equalization processing.

The eDSP module 1221 may also be referred to as a DSP module for short. Positions of the eDSP module 1221 and the oDSP module 1222 in FIG. 10 are interchangeable.

When the first parallel digital signal is processed, both the eDSP module 1221 and the oDSP module 1222 are enabled; and when the second parallel digital signal is processed, the oDSP module 1222 is disabled, and the eDSP module 1221 is enabled, to reduce power consumption.

In some examples, the eDSP module 1221 includes a feed-forward equalizer (feed-forward equalizer, FFE).

In some examples, as shown in FIG. 11, the oDSP module 1222 includes a pattern-dependent look-up table (pattern-dependent look-up table, PDLUT) module 12221, a multipath interference (multipath interference, MPI) module 12222, and a lite Vol filter (Lite Volterra filter, Lite VOL) module 12223.

The PDLUT module 12221, the MPI module 12222, and the Lite VOL module 12223 may be connected in series, and relative positions of the modules may be adjusted randomly. When the oDSP module 1222 performs optical algorithm equalization processing on the first parallel digital signal, a specific to-be-used algorithm (a specific to-be-used module) is determined based on the first optical module 2, the second optical module 5, and the optical channel between the first optical module 2 and the second optical module 5.

In some examples, as shown in FIG. 10, the eo-DSP module 122 further includes a maximum likelihood sequence estimation (maximum likelihood sequence estimation, MLSE) module 1223. The MLSE module 1223 is configured to: perform maximum likelihood determining on the first parallel digital signal obtained by performing the optical algorithm equalization processing and the electrical algorithm equalization processing, and send a determining result to the processing unit 11.

An input end of the MLSE module 1223 is connected to the eDSP module 1221 or the oDSP module 1222, and an output end of the MLSE module 1223 is connected to the processing unit 11. The MLSE module 1223 supports electrical channel equalization and optical channel equalization. This enhances capabilities of electrical channel equalization and optical channel equalization, and supports implementation of electrical-optical integration.

In some examples, the MLSE module 1223 is configured to: form a combination based on a delay and a channel parameter that is obtained through previous-stage equalization, compare the combination with a previous vector combination, and perform maximum likelihood determining based on a comparison probability.

In some examples, as shown in FIG. 10, the eDSP module 1221, the oDSP module 1222, and the MLSE 223 module are sequentially connected.

In some other examples, the oDSP module 1222, the eDSP 1221 module, and the MLSE module 1223 are sequentially connected.

(3) Signals are attenuated during transmission on an electrical channel. In addition, attenuation of signals of different frequencies is inconsistent. Generally, attenuation of a low-frequency signal is small, and attenuation of a high-frequency signal is large. However, the inconsistency of the attenuation of the signals of different frequencies may lead to inter-symbol interference (inter-symbol interference, ISI).

To resolve or alleviate the attenuation of the signal on the electrical channel, in some examples, as shown in FIG. 12, the receiver 12 further includes a continuous time linear equalizer (continuous time linear equalizer, CTLE) 123. The CTLE 123 is configured to: compensate for the first serial analog signal sent by the first optical module 2, and send a compensated first serial analog signal to the ADC 121.

An input end of the CTLE 123 is configured to be connected to the receiving optical sub-assembly 21 of the first optical module 2, and an output end of the CTLE 123 is connected to the input end of the ADC 121.

According to the technical solution provided in this embodiment of the present disclosure, the CTLE 123 is configured to compensate for the first serial analog signal, so that attenuation of the first serial analog signal can be compensated for, attenuation of signals of frequencies in the first serial analog signal can tend to be consistent, thereby resolving or alleviating the ISI.

In some examples, a gain of the CTLE 123 is adjustable. In this case, a gain of the CTLE 123 for compensating for the first serial analog signal is determined based on an electrical channel that the first signal passes through in a transmission process (where attenuation on an optical channel is small). How to determine the gain of the CTLE 123 is described below with reference to examples.

For example, neither the first optical module 2 nor the second optical module 5 include the signal processing component 23. In this case, a process in which the first communication device 100 receives a signal of the second communication device 200 is as follows: The third chip 4 sends a first serial analog signal to the second optical module 5 through the electrical channel, and the second optical module 5 converts the first serial analog signal into a first optical signal, and sends the first optical signal to the first optical module 2 through the optical channel (an optical fiber). The first optical module 2 converts the first optical signal into the first serial analog signal, and sends the first serial analog signal to the CTLE 123 of the first chip 1 through the electrical channel. The first optical signal, the first serial analog signal, and the first parallel digital signal may be considered as different forms of a first signal, and therefore may be collectively referred to as the first signal.

It can be learned that, before arriving at the CTLE 123, the first signal passes through the electrical channel between the third chip 4 and the second optical module 5 and the electrical channel between the first optical module 2 and the first chip 1. Therefore, attenuation occurs on both the two electrical channels. In this case, the gain of the CTLE 123 is determined based on the electrical channel between the first chip 1 and the first optical module 2 and the electrical channel between the third chip 4 and the second optical module 5, so that the CTLE 123 can compensate for the attenuation of the signal on both the two electrical channels.

For another example, the first optical module 2 does not include the signal processing component 23, but the second optical module 5 includes the signal processing component 23. In other words, the second optical module 5 uses the structure shown in FIG. 2 and FIG. 3. A process in which the first communication device 100 receives a signal of the second communication device 200 is as follows: The third chip 4 sends a first serial analog signal to the second optical module 5 through the electrical channel, the signal processing component 23 of the second optical module 5 processes the first serial analog signal, and then the second optical module 5 converts the first serial analog signal into a first optical signal, and sends the first optical signal to the first optical module 2 through the optical channel. The first optical module 2 converts the first optical signal into the first serial analog signal, and sends the first serial analog signal to the CTLE 123 of the first chip 1 through the electrical channel.

In the foregoing process, although the first signal also passes through the electrical channel between the third chip 4 and the second optical module 5 and the electrical channel between the first optical module 2 and the first chip 1, the signal processing component 23 of the second optical module 5 processes the first serial analog signal, and generally, attenuation generated on the electrical channel between the third chip 4 and the second optical module 5 is compensated for during the processing. Therefore, the CTLE 123 may process only attenuation caused by the electrical channel between the first optical module 2 and the first chip 1, and in this case, the CTLE 123 may determine a corresponding gain based only on the electrical channel between the first optical module 2 and the first chip 1.

In some examples, because the second serial analog signal sent by the second chip 3 also passes through the electrical channel, attenuation of signals of different frequencies is also inconsistent. In this case, the CTLE 123 is further configured to: compensate for the second serial analog signal sent by the second chip 3, and send a compensated second serial analog signal to the ADC 121. The input end of the CTLE 123 is further connected to the second chip 3. A gain of the CTLE 123 for compensating for the second serial analog signal is determined based on the electrical channel between the second chip 3 and the first chip 1.

A possible implementation of the CTLE 123 is provided below.

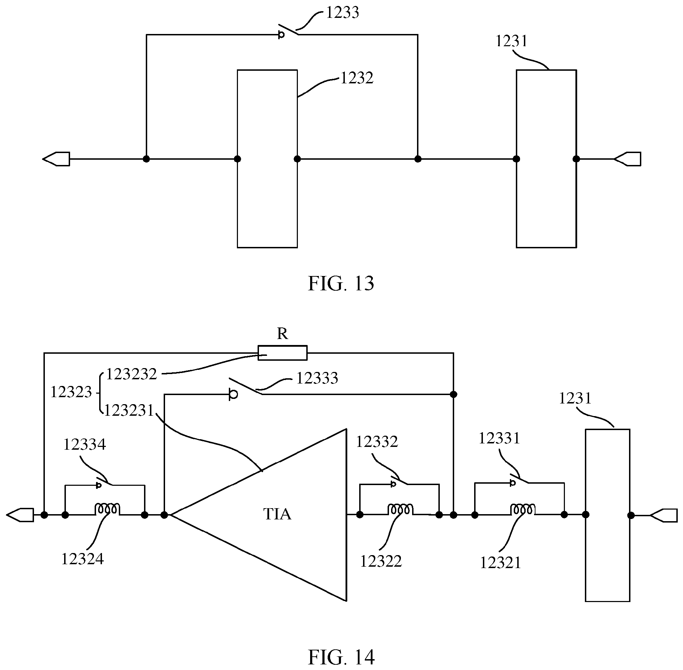

In some examples, as shown in FIG. 13, the CTLE 123 includes a trans-conductance circuit 1231, a filtering and amplification circuit 1232, and a bypass circuit 1233. An input end of the trans-conductance circuit 1231 is configured to receive a serial analog signal (for example, the first serial analog signal or the second serial analog signal), an output end of the trans-conductance circuit 1231 is connected to an input end of the filtering and amplification circuit 1232, and an output end of the filtering and amplification circuit 1232 is connected to the input end of the ADC 121. Two ends of the bypass circuit 1233 are respectively connected to the input end and the output end of the filtering and amplification circuit 1232, and when the bypass circuit 1233 is connected, the bypass circuit 1233 short-circuits the filtering and amplification circuit 1232.

The filtering and amplification circuit 1232 is configured to filter a signal of a frequency with small attenuation, for example, filter a low-frequency signal, so that attenuation of the signal at all frequency parts is consistent, and is configured to amplify the signal to compensate for attenuation of the signal.

When the bypass circuit 1233 is connected, a signal outputted by the trans-conductance circuit 1231 is directly inputted to the ADC 121 without passing through the filtering and amplification circuit 1232. In this case, the gain of the CTLE 123 is extremely small, and it may be considered that the gain is 0.

In some examples, as shown in FIG. 14, the filtering and amplification circuit 1232 includes a first filtering circuit 12321, a second filtering circuit 12322, an amplification circuit 12323, and a third filtering circuit 12324 that are sequentially connected. The bypass circuit 1233 includes a first bypass circuit 12331, a second bypass circuit 12332, a third bypass circuit 12333, and a fourth bypass circuit 12334. Two ends of the first bypass circuit 12331 are respectively connected to two ends of the first filtering circuit 12321, two ends of the second bypass circuit 12332 are respectively connected to two ends of the second filtering circuit 12322, two ends of the third bypass circuit 12333 are respectively connected to an input end of the second filtering circuit 12322 and an output end of the amplification circuit 12323, and two ends of the fourth bypass circuit 12334 are respectively connected to two ends of the third filtering circuit 12324. When all of the first bypass circuit 12331, the third bypass circuit 12333, and the fourth bypass circuit 12334 are connected, the bypass circuit 1233 is connected.

The first filtering circuit 12321, the second filtering circuit 12322, and the third filtering circuit 12324 are configured to filter a signal of frequency with small attenuation, for example, filter a low-frequency signal. The amplification circuit 12323 is configured to amplify a signal.

When all of the first bypass circuit 12331, the third bypass circuit 12333, and the fourth bypass circuit 12334 are connected, the second bypass circuit 12332 is short-circuited by the third bypass circuit 12333. Therefore, in this case, whether the second bypass circuit 12332 is connected does not affect connection of the bypass circuit 1233.

In some examples, as shown in FIG. 14, the amplification circuit 12323 includes a second trans-impedance amplifier (trans-impedance amplifier, TIA) 123231 and a resistor 123232. In this case, the first filtering circuit 12321, the second filtering circuit 12322, the second trans-impedance amplifier 123231, and the third filtering circuit 12324 are sequentially connected, and the two ends of the third bypass circuit 12333 are respectively connected to the input end of the second filtering circuit 12322 and an output end of the second trans-impedance amplifier 123231.

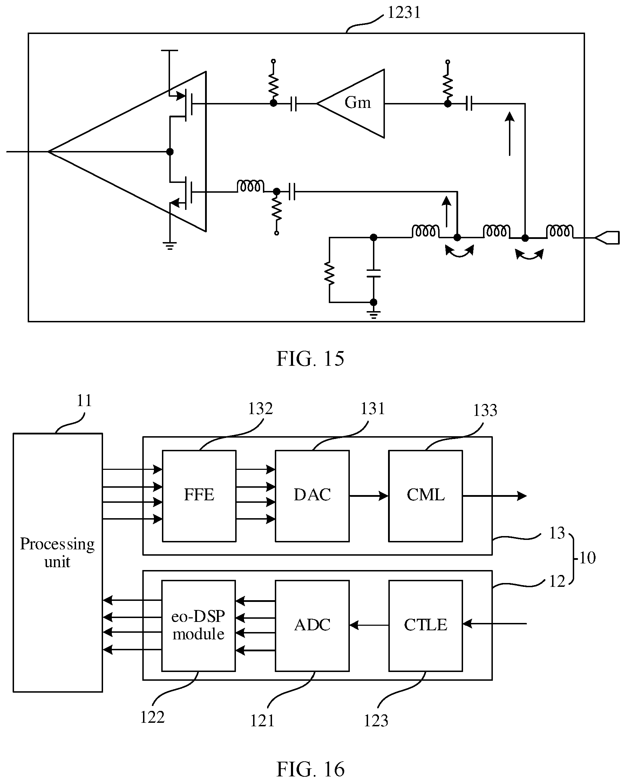

In some examples, as shown in FIG. 15, an implementation of the trans-conductance circuit 1231 is provided.

With reference to a specific application, a state of the bypass circuit 1233 of the CTLE 123 is described below by using examples.

In some examples, as shown in FIG. 7, the first chip 1 and the first optical module 2 are packaged in the CPO form. In this case, the CTLE 123 is configured such that when a first serial analog signal sent by the first optical module 2 is compensated for, the bypass circuit 1233 is connected.

When the first chip 1 and the first optical module 2 are packaged in the CPO form, the electrical channel between the first optical module 2 and the first chip 1 is very short (where a loss of the electrical channel is less than 10 dB), and attenuation occurring on the electrical channel is very small. Therefore, the bypass circuit 1233 may be directly connected, so that the first serial analog signal does not pass through the filtering and amplification circuit 1232.

In some examples, as shown in FIG. 6, the first optical module 2 is packaged in the NPO form or in the OBO form, or as shown in FIG. 5, the first optical module 2 is a pluggable module. In this case, the CTLE 123 is configured such that when the first serial analog signal sent by the first optical module 2 is compensated for, the bypass circuit 1233 is not connected (disconnected).

The bypass circuit 1233 being not connected may mean that all of the first bypass circuit 12331, the third bypass circuit 12333, and the fourth bypass circuit 12334 are not connected, or may mean that some of the first bypass circuit 12331, the third bypass circuit 12333, and the fourth bypass circuit 12334 are not connected.

For example, when the first optical module 2 is packaged in the NPO form or in the OBO form, all of the first bypass circuit 12331, the second bypass circuit 12332, and the fourth bypass circuit 12334 may be connected, and the third bypass circuit 12333 is not connected (that is, disconnected). In this case, a signal outputted by the trans-conductance circuit 1231 only passes through the amplification circuit 12323, and then is inputted to the ADC 121. It is clear that any one or more of the first bypass circuit 12331, the second bypass circuit 12332, and the fourth bypass circuit 12334 may alternatively be connected, to implement different gains.

For another example, when the first optical module 2 is a pluggable module, all of the first bypass circuit 12331, the second bypass circuit 12332, the third bypass circuit 12333, and the fourth bypass circuit 12334 may not be connected (that is, disconnected). In this case, a signal outputted by the trans-conductance circuit 1231 sequentially passes through the first filtering circuit 12321, the second filtering circuit 12322, the amplification circuit 12323, and the third filtering circuit 12324, and then is inputted to the ADC 121. In this case, a gain of the CTLE 123 is large. It is clear that any one or more of the first bypass circuit 12331, the second bypass circuit 12332, and the fourth bypass circuit 12334 may alternatively be disconnected, to implement different gains.

For another example, when the CTLE 123 compensates for the second serial analog signal, all of the first bypass circuit 12331, the second bypass circuit 12332, the third bypass circuit 12333, and the fourth bypass circuit 12334 may not be connected (that is, disconnected). In this case, a signal outputted by the trans-conductance circuit 1231 sequentially passes through the first filtering circuit 12321, the second filtering circuit 12322, the amplification circuit 12323, and the third filtering circuit 12324, and then is inputted to the ADC 121. It is clear that any one or more of the first bypass circuit 12331, the second bypass circuit 12332, and the fourth bypass circuit 12334 may alternatively be disconnected, to implement different gains.

It should be noted that a plurality of gains of the CTLE 123 can be implemented by controlling connection and disconnection of the first bypass circuit 12331, the second bypass circuit 12332, the third bypass circuit 12333, and the fourth bypass circuit 12334. A specific to-be-used gain is determined based on an electrical channel through which a to-be-compensated signal passes.

An adjustment range of the gain of the CTLE 123 is not limited in this embodiment of the present disclosure. In some examples, the adjustment range of the gain of the CTLE 123 is 0 dB to 20 dB.

### Transmitter 13:

(1) In some examples, as shown in FIG. 12 or FIG. 16, the transmitter 13 includes a digital-to-analog converter (digital-to-analog converter, DAC) 131. An input end of the DAC 131 is connected to the processing unit 11, and an output end is configured to be connected to the transmitting optical sub-assembly 22 of the first optical module 2. The DAC 131 is configured to: convert a third parallel digital signal sent by the processing unit 11 into a third serial analog signal, and send the third serial analog signal to the first optical module 2.

The third serial analog signal and the third parallel digital signal may be considered as different forms of a third signal, and therefore may be collectively referred to as the third signal. All signals sent by the first chip 1 to the third chip 4 may be considered as third signals.

In addition, in a scenario in which the first chip 1 further has a requirement for communicating with the second chip 3, the output end of the DAC 131 is further configured to be connected to the second chip 3. The DAC 131 is further configured to: convert a fourth parallel digital signal sent by the processing unit 11 into a fourth serial analog signal, and send the fourth serial analog signal to the second chip 3.

The fourth serial analog signal and the fourth parallel digital signal may also be considered as different forms of a fourth signal, and therefore may be collectively referred to as the fourth signal. All signals sent by the first chip 1 to the second chip 3 may be considered as fourth signals.

(2) In some examples, as shown in FIG. 16, the transmitter 13 provided in this embodiment of the present disclosure further includes an FFE 132. An input end of the FFE 132 is connected to the processing unit 11, and an output end of the FFE 132 is connected to the DAC 131. The FFE 132 is configured to: perform equalization processing (or referred to as feed-forward equalization processing) on a parallel digital signal (for example, the third parallel digital signal or the fourth parallel digital signal) sent by the processing unit 11, and send a parallel digital signal obtained through the equalization processing to the DAC 131.

In some examples, the FFE 132 is configured to perform equalization processing on oscillation points of the third parallel digital signal sent by the processing unit 11 of the first chip 1.

The oscillation points are generated due to channel discontinuity, impedance discontinuity, a modulator in the transmitting optical sub-assembly 22, and the like.

In different application scenarios, because transmit channels corresponding to the first chip 1 are different, positions of oscillation points (or referred to as vibration points) of the third parallel digital signal are different. However, in a case in which the first optical module 2 does not include the signal processing component 23, a transmit channel corresponding to the first chip 1 is more complex (if there is the signal processing component 23, only a channel between the first chip 1 and the first optical module 2 needs to be considered). The optical channel between the first optical module 2 and the second optical module 5 and even the electrical channel between the second optical module 5 and the third chip 4 affect the positions of the oscillation points, and cases of the oscillation points of the third parallel digital signal are more complex.

However, when the first chip 1 is delivered from a factory, a specific scenario in which the first chip 1 is used subsequently is not determined. Therefore, the FFE 132 should be able to process all possible oscillation points of the third parallel digital signal. In this case, in an example, the FFE 132 includes roaming taps (roaming taps), and positions of the roaming taps correspond to the oscillation points of the third parallel digital signal.

According to the technical solution provided in this embodiment of the present disclosure, the FFE 132 is configured with the roaming taps, so that the FFE 132 can adjust, by changing the positions of the taps, the oscillation points corresponding to the FFE 132, to adapt to different scenarios. In addition, a quantity of taps of the FFE 132 is reduced, and costs are reduced.

In some examples, the FFE 132 includes some fixed taps and some roaming taps. For example, there are five fixed taps.

In some examples, the positions of the roaming taps are determined based on the electrical channel between the first chip 1 and the first optical module 2 and the optical channel between the first optical module 2 and the second optical module 5. The second optical module 5 is connected to the first optical module 2 through the optical channel.

In some examples, the positions of the roaming taps are determined based on the electrical channel between the first chip 1 and the first optical module 2, the optical channel between the first optical module 2 and the second optical module 5, and the electrical channel between the second optical module 5 and the second chip 3.

(3) In some examples, as shown in FIG. 15, the transmitter 13 provided in this embodiment of the present disclosure further includes a current mode logic (current mode logic, CML) module 133. An input end of the CML module 133 is connected to the output end of the DAC 131, and an output end of the CML module 133 is configured to be connected to the transmitting optical sub-assembly 22. The CML module 133 is configured to: adjust a swing of the third serial analog signal sent by the DAC 131, and send an adjusted third serial analog signal to the first optical module 2.

In addition, in the scenario in which the first chip 1 further has a requirement for communicating with the second chip 3, the output end of the CML module 133 is further configured to be connected to the second chip 3. The CML module 133 is configured to: adjust a swing of the fourth serial analog signal sent by the DAC 131, and send an adjusted fourth serial analog signal to the second chip 3.

The CML module 133 can flexibly adjust a swing of a serial analog signal outputted by the DAC 131, to improve a signal-to-noise ratio (signal-noise ratio, SNR), so as to meet an input requirement of a driver 222 in the transmitting optical sub-assembly 22.

In some examples, if the first chip 1 and the first optical module 2 are packaged in a CPO form, the third serial analog signal sent by the CML module 133 may be directly for driving a laser 221 in the first optical module 2, and the driver 222 of the transmitting optical sub-assembly 22 of the first optical module 2 may be removed.

To enable the CML module 133 to directly drive the laser 221, the swing of the third serial analog signal outputted by the CML module 133 should be large. For example, the swing of the third serial analog signal sent by the CML module 133 may be greater than 1.5 Vppd, may be further greater than 2 Vppd, and may be further greater than 3 Vppd.

According to the technical solution provided in this embodiment of the present disclosure, a new transceiver 10 is designed by integrating features of an electrical channel and an optical channel, so that the first chip 1 can be used in a scenario in which an insertion loss of a pure electrical channel reaches 50 dB, to meet a direct attach cable (direct attach cable, DAC) application and a backplane electrical channel application. In addition, the first chip 1 can be used in a scenario of an electrical-optical integration channel in which an insertion loss of an electrical channel reaches 40 dB, and a transmission distance of an optical channel is 10 km.

An embodiment of the present disclosure further provides an optical module (for example, the first optical module 2). As shown in FIG. 4 to FIG. 7 or FIG. 17, the optical module includes a receiving optical sub-assembly 21 and a transmitting optical sub-assembly 22. The receiving optical sub-assembly 21 is configured to be connected to the receiver 12 of the first chip 1, and the transmitting optical sub-assembly 22 is configured to be connected to the transmitter 13 of the first chip 1.

The optical module provided in this embodiment of the present disclosure may be an intensity-modulation direct-detection (intensity-modulation direct-detection, IMDD) optical module.

In some examples, as shown in FIG. 5 to FIG. 7 or FIG. 17, the receiving optical sub-assembly 21 includes a detector 211 and a first trans-impedance amplifier 212. An input end of the detector 211 is configured to receive an optical signal, an output end of the detector 211 is electrically connected to an input end of the first trans-impedance amplifier 212, and an output end of the first trans-impedance amplifier 212 is electrically connected to the receiver 12.

The detector 211 may be a photodiode (photodiode, PD). The detector 211 is configured to: convert an optical signal into an electrical signal (a first serial analog signal), and then send the electrical signal to the first trans-impedance amplifier 212. The first trans-impedance amplifier 212 sends the electrical signal to the receiver 12 of the first chip 1.

In some examples, as shown in FIG. 5 to FIG. 7 or FIG. 17, the transmitting optical sub-assembly 22 includes a laser 221 and a driver 222. An input end of the driver 222 is connected to the transmitter 13 of the first chip 1, an output end of the driver 222 is connected to the laser 221, and the laser 221 is configured to emit an optical signal.

The laser 221 may include one or more of an electro-absorption modulated laser (electro-absorption modulated laser, EML), a vertical-cavity surface-emitting laser (vertical-cavity surface-emitting laser, VCSEL), and a traveling wave Mach-Zehnder modulator (traveling wave Mach-Zehnder modulator, TW-MZM).

In some examples, when the first chip 1 and the first optical module 2 are packaged in a CPO form, the driver 222 in the transmitting optical sub-assembly 22 may be removed, and the CML module 133 in the transmitter 13 of the first chip 1 directly drives the laser 221 to emit laser light. In this case, a swing of a signal outputted by the CML module 133 is large, for example, greater than 1.5 Vppd, and further greater than 2 Vppd.

An embodiment of the present disclosure further provides a receiver 12. As shown in FIG. 4 or FIG. 8, the receiver 12 is used in a first chip 1, and the receiver 12 includes an ADC 121 and an eo-DSP module 122. An input end of the ADC 121 is configured to be connected to a receiving optical sub-assembly 21 of a first optical module 2, an output end of the ADC 121 is connected to an input end of the eo-DSP module 122, and an output end of the eo-DSP module 122 is connected to a processing unit 11 of the first chip 1.

In some examples, as shown in FIG. 10, the eo-DSP module 122 includes an eDSP module 1221 and an oDSP module 1222 that are connected in series.

In some examples, as shown in FIG. 11, the oDSP module 1222 includes one or more of a PDLUT module 12221, an MPI module 12222, and a Lite VOL module 12223.

In some examples, as shown in FIG. 10, the eo-DSP module 122 includes an MLSE module 1223. An input end of the MLSE module 1223 is connected to an output end of the eDSP module 1221 or an output end of the oDSP module 1222, and an output end of the MLSE module 1223 is connected to the processing unit 11.

In some examples, as shown in FIG. 10, the eDSP module 1221, the oDSP module 1222, and the MLSE module 1223 are sequentially connected.

In some other examples, the oDSP module 1222, the eDSP module 1221, and the MLSE module 1223 are sequentially connected.

In some examples, the input end of the ADC 121 is further configured to be connected to a second chip 3 through an electrical channel.

In some examples, as shown in FIG. 12, the receiver 12 further includes a CTLE 123. An input end of the CTLE 123 is configured to be connected to the receiving optical sub-assembly 21 of the first optical module 2 (or may be connected to the second chip 3), and an output end of the CTLE 123 is connected to the input end of the ADC 121.

In some examples, as shown in FIG. 13, the CTLE 123 includes a trans-conductance circuit 1231, a filtering and amplification circuit 1232, and a bypass circuit 1233. An input end of the trans-conductance circuit 1231 is configured to be connected to the first optical module 2 and/or the second chip 3, an output end of the trans-conductance circuit 1231 is connected to an input end of the filtering and amplification circuit 1232, and an output end of the filtering and amplification circuit 1232 is connected to the input end of the ADC 121. Two ends of the bypass circuit 1233 are respectively connected to the input end and the output end of the filtering and amplification circuit 1232, and when the bypass circuit 1233 is connected, the bypass circuit 1233 short-circuits the filtering and amplification circuit 1232.

In some examples, as shown in FIG. 14, the filtering and amplification circuit 1232 includes a first filtering circuit 12321, a second filtering circuit 12322, an amplification circuit 12323, and a third filtering circuit 12324 that are sequentially connected. The bypass circuit 1233 includes a first bypass circuit 12331, a second bypass circuit 12332, a third bypass circuit 12333, and a fourth bypass circuit 12334. Two ends of the first bypass circuit 12331 are respectively connected to two ends of the first filtering circuit 12321, two ends of the second bypass circuit 12332 are respectively connected to two ends of the second filtering circuit 12322, two ends of the third bypass circuit 12333 are respectively connected to an input end of the second filtering circuit 12322 and an output end of the amplification circuit 12323, and two ends of the fourth bypass circuit 12334 are respectively connected to two ends of the third filtering circuit 12324. When all of the first bypass circuit 12331, the third bypass circuit 12333, and the fourth bypass circuit 12334 are connected, the bypass circuit 1233 is connected.

It should be noted that, for detailed descriptions of the receiver 12 and the modules included in the receiver 12, reference may be made to the foregoing content. Details are not described herein again.

An embodiment of the present disclosure further provides a transmitter 13. As shown in FIG. 16, the transmitter 13 is used in a first chip 1. The transmitter 13 includes a DAC 131 and an FFE 132. An input end of the FFE 132 is connected to a processing unit 11 of the first chip 1, an output end of the FFE 132 is connected to an input end of the DAC 131, and an output end of the DAC 131 is configured to be connected to a first optical module 2.

The FFE 132 includes roaming taps.

In some examples, the FFE 132 further includes fixed taps.

In some examples, as shown in FIG. 16, the transmitter 13 further includes a CML module 133. An input end of the CML module 133 is connected to the output end of the DAC 131, and an output end of the CML module 133 is configured to be connected to a transmitting optical sub-assembly 22 of the first optical module 2.

In some examples, a swing of a third serial analog signal sent by the CML module 133 is greater than 1.5 Vppd.

It should be noted that, for detailed descriptions of the transmitter 13 and the modules included in the transmitter 13, reference may be made to the foregoing content. Details are not described herein again.

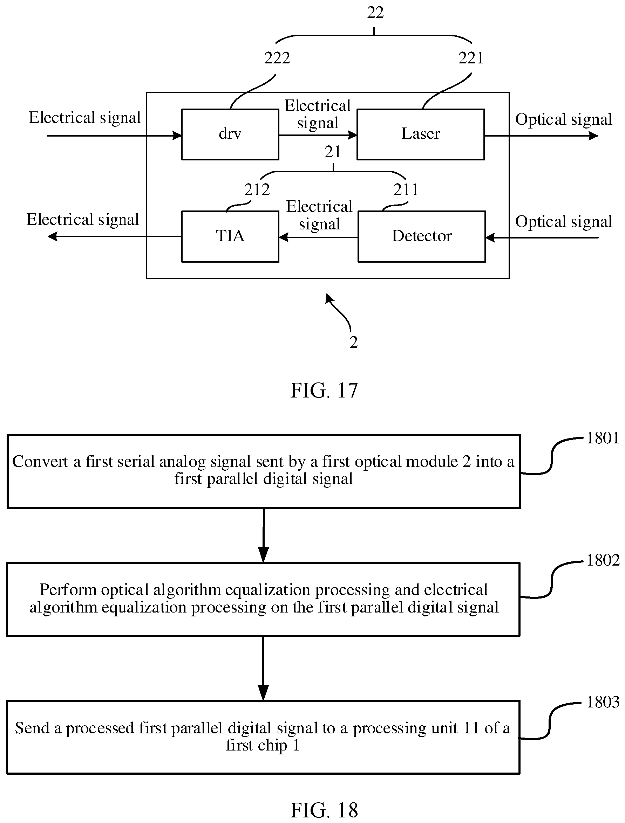

An embodiment of the present disclosure further provides a signal processing method. The method is applied to a receiver 12 of a first chip 1. As shown in FIG. 18, the method includes the following steps.

Step 1801: Convert a first serial analog signal sent by a first optical module 2 into a first parallel digital signal.

An ADC 121 in the receiver 12 converts the first serial analog signal into the first parallel digital signal.

Step 1802: Perform optical algorithm equalization processing and electrical algorithm equalization processing on the first parallel digital signal.

An eo-DSP module 122 in the receiver 12 performs the optical algorithm equalization processing and the electrical algorithm equalization processing on the first parallel digital signal.

Step 1803: Send a processed first parallel digital signal to a processing unit 11 of the first chip 1.

The eo-DSP module 122 in the receiver 12 sends the processed first parallel digital signal to the processing unit 11.

In some examples, after the performing optical algorithm equalization processing and electrical algorithm equalization processing on the first parallel digital signal, the method further includes: performing maximum likelihood determining on the first parallel digital signal obtained by performing the optical algorithm equalization processing and the electrical algorithm equalization processing, and sending a determining result to the processing unit 11. An MLSE module 1223 in the eo-DSP module 122 performs the maximum likelihood determining on the first parallel digital signal.

In some examples, the method further includes: converting a second serial analog signal sent by a second chip 3 into a second parallel digital signal, where a channel between the first chip 1 and the second chip 3 is an electrical channel; performing electrical algorithm equalization processing on the second parallel digital signal; and sending a processed second parallel digital signal to the processing unit 11.

In some examples, before the converting a first serial analog signal sent by a first optical module 2 into a first parallel digital signal, the method further includes: compensating for the first serial analog signal sent by the first optical module 2. A CTLE 123 compensates for the first serial analog signal.

In some examples, a gain for compensating for the first serial analog signal is determined based on an electrical channel between the first chip 1 and the first optical module 2 and an electrical channel between a third chip 4 and a second optical module 5. The second optical module 5 is connected to the first optical module 2 through an optical channel, and the third chip 4 is connected to the second optical module 5 through the electrical channel.

It should be noted that the signal processing method provided in this embodiment of the present disclosure and related content of the foregoing receiver 12 fall within the same concept. For a specific implementation process of the method, refer to the related content of the receiver 12. Details are not described herein again.

The foregoing descriptions are merely optional embodiments of the present disclosure, but are not intended to limit the present disclosure. Any modification, equivalent replacement, improvement, or the like made without departing from the principle of the present disclosure should fall within the protection scope of the present disclosure.

## Claims

1. A receiver, wherein the receiver (12) is used in a first chip (1), and the receiver (12) comprises an analog-to-digital converter ADC (121) and an electrical-optical digital signal processing eo-DSP module (122), wherein
the ADC (121) is configured to convert a first serial analog signal sent by a first optical module (2) into a first parallel digital signal; and
the eo-DSP module (122) is configured to: perform optical algorithm equalization processing and electrical algorithm equalization processing on the first parallel digital signal, and send a processed first parallel digital signal to a processing unit (11) of the first chip (1).

2. The receiver according to claim 1, wherein the eo-DSP module (122) comprises an electrical digital signal processing eDSP module (1221) and an optical digital signal processing oDSP module (1222) that are connected in series.

3. The receiver according to claim 1 or 2, wherein the eo-DSP module (122) comprises a maximum likelihood sequence estimation MLSE module (1223); and
the MLSE module (1223) is configured to: perform maximum likelihood determining on the first parallel digital signal obtained by performing the optical algorithm equalization processing and the electrical algorithm equalization processing, and send a determining result to the processing unit (11).

4. The receiver according to any one of claims 1 to 3, wherein the ADC (121) is further configured to convert a second serial analog signal sent by a second chip (3) into a second parallel digital signal, wherein a channel between the first chip (1) and the second chip (3) is an electrical channel; and
the eo-DSP module (122) is further configured to: perform electrical algorithm equalization processing on the second parallel digital signal, and send a processed second parallel digital signal to the processing unit (11).

5. The receiver according to any one of claims 1 to 4, wherein the receiver (12) further comprises a continuous time linear equalizer CTLE (123), wherein
the CTLE (123) is configured to: compensate for the first serial analog signal sent by the first optical module (2), and send a compensated first serial analog signal to the ADC (121).

6. The receiver according to claim 5, wherein a gain of the CTLE (123) for compensating for the first serial analog signal is determined based on an electrical channel between the first chip (1) and the first optical module (2) and an electrical channel between a third chip (4) and a second optical module (5); and
the second optical module (5) is connected to the first optical module (2) through an optical channel, and the third chip (4) is connected to the second optical module (5) through the electrical channel.

7. The receiver according to claim 5 or 6, wherein the CTLE (123) comprises a trans-conductance circuit (1231), a filtering and amplification circuit (1232), and a bypass circuit (1233), wherein
an input end of the trans-conductance circuit (1231) is configured to receive the first serial analog signal, an output end of the trans-conductance circuit (1231) is connected to an input end of the filtering and amplification circuit (1232), and an output end of the filtering and amplification circuit (1232) is connected to an input end of the ADC (121); and
two ends of the bypass circuit (1233) are respectively connected to the input end and the output end of the filtering and amplification circuit (1232), and when the bypass circuit (1233) is connected, the bypass circuit (1233) short-circuits the filtering and amplification circuit (1232).

8. The receiver according to claim 7, wherein the filtering and amplification circuit (1232) comprises a first filtering circuit (12321), a second filtering circuit (12322), an amplification circuit (12323), and a third filtering circuit (12324) that are sequentially connected;
the bypass circuit (1233) comprises a first bypass circuit (12331), a second bypass circuit (12332), a third bypass circuit (12333), and a fourth bypass circuit (12334);
two ends of the first bypass circuit (12331) are respectively connected to two ends of the first filtering circuit (12321), two ends of the second bypass circuit (12332) are respectively connected to two ends of the second filtering circuit (12322), two ends of the third bypass circuit (12333) are respectively connected to an input end of the second filtering circuit (12322) and an output end of the amplification circuit (12323), and two ends of the fourth bypass circuit (12334) are respectively connected to two ends of the third filtering circuit (12324); and
when all of the first bypass circuit (12331), the third bypass circuit (12333), and the fourth bypass circuit (12334) are connected, the bypass circuit (1233) is connected.

9. The receiver according to claim 7 or 8, wherein the first chip (1) and the first optical module (2) are packaged in a co-packaged optics CPO form; and
the CTLE (123) is configured such that when the first serial analog signal sent by the first optical module (2) is compensated for, the bypass circuit (1233) is connected.

10. The receiver according to claim 7 or 8, wherein the first optical module (2) is packaged in a near-packaged optics NPO form or in an on-board optics OBO form, or the first optical module (2) is a pluggable module; and
the CTLE (123) is configured such that when the first serial analog signal sent by the first optical module (2) is compensated for, the bypass circuit (1233) is not connected.

11. A transceiver, wherein the transceiver (10) comprises a receiver (12) and a transmitter (13), and the receiver (12) is the receiver according to any one of claims 1 to 10.

12. The transceiver according to claim 11, wherein the transmitter (13) comprises a digital-to-analog converter DAC (131) and a feed-forward equalizer FFE (132), wherein
the FFE (132) is configured to: perform equalization processing on oscillation points of a third parallel digital signal sent by a processing unit (11) of a first chip (1), and send a third parallel digital signal obtained through the equalization processing to the DAC (131), wherein the FFE (132) comprises roaming taps, and positions of the roaming taps correspond to the oscillation points of the third parallel digital signal; and
the DAC (131) is configured to: convert the third parallel digital signal sent by the FFE (132) into a third serial analog signal, and send the third serial analog signal to a first optical module (2).

13. The transceiver according to claim 12, wherein the transmitter (13) further comprises a current mode logic CML module (133), wherein
the CML module (133) is configured to: adjust a swing of the third serial analog signal sent by the DAC (131), and send an adjusted third serial analog signal to the first optical module (2).

14. The transceiver according to claim 13, wherein the first chip (1) and the first optical module (2) are packaged in a co-packaged optics CPO form, and the third serial analog signal sent by the CML module (133) is directly for driving a laser (221) of the first optical module (2).

15. The transceiver according to claim 13 or 14, wherein the swing of the third serial analog signal sent by the CML module (133) is greater than 1.5 Vppd.

16. A chip, wherein the chip comprises a processing unit (11) and the transceiver (10) according to any one of claims 11 to 15.

17. A communication device, wherein the communication device comprises an optical module and the chip according to claim 16, wherein
a receiver (12) of the chip is connected to a receiving optical sub-assembly (21) of the optical module; and
a transmitter (13) of the chip is connected to a transmitting optical sub-assembly (22) of the optical module.

18. A signal processing method, wherein the method is applied to a receiver (12) of a first chip (1), and the method comprises:
converting a first serial analog signal sent by a first optical module (2) into a first parallel digital signal;
performing optical algorithm equalization processing and electrical algorithm equalization processing on the first parallel digital signal; and
sending a processed first parallel digital signal to a processing unit (11) of the first chip (1).

19. The method according to claim 18, wherein after the performing optical algorithm equalization processing and electrical algorithm equalization processing on the first parallel digital signal, the method further comprises:
performing maximum likelihood determining on the first parallel digital signal obtained by performing the optical algorithm equalization processing and the electrical algorithm equalization processing, and sending a determining result to the processing unit (11).

20. The method according to claim 18 or 19, wherein the method further comprises:
converting a second serial analog signal sent by a second chip (3) into a second parallel digital signal, wherein a channel between the first chip (1) and the second chip (3) is an electrical channel;
performing electrical algorithm equalization processing on the second parallel digital signal; and
sending a processed second parallel digital signal to the processing unit (11).

21. The method according to any one of claims 18 to 20, wherein before the converting a first serial analog signal sent by a first optical module (2) into a first parallel digital signal, the method further comprises:
compensating for the first serial analog signal sent by the first optical module (2).

22. The method according to claim 21, wherein a gain for compensating for the first serial analog signal is determined based on an electrical channel between the first chip (1) and the first optical module (2) and an electrical channel between a third chip (4) and a second optical module (5); and
the second optical module (5) is connected to the first optical module (2) through an optical channel, and the third chip (4) is connected to the second optical module (5) through the electrical channel.
